(19) Europäisches Patentamt

European Patent Office

Office européen des brevets

(11) **EP 1 018 450 A1**

(12) **DEMANDE DE BREVET EUROPEEN**

(43) Date de publication:
**12.07.2000 Bulletin 2000/28**

(51) Int. Cl.7: **B60K 41/28**

(21) Numéro de dépôt: **00400025.3**

(22) Date de dépôt: **07.01.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **08.01.1999 FR 9900125**

(71) Demandeur: **RENAULT**
**92513 Boulogne Billancourt Cedex (FR)**

(72) Inventeurs:
• **Pouyau, Laurent**
**92290 Chatenay Malabry (FR)**
• **Rivoiron, Sylvain**
**95320 Saint Leu La Foret (FR)**

(54) **Dispositif de pilotage des rapports de transmission d'un véhicule automobile**

(57) L'invention propose un dispositif de pilotage d'une transmission d'un véhicule automobile dont un moteur est accouplé à une boîte de vitesses robotisée par l'intermédiaire d'un embrayage, dont un module électronique de commande du véhicule reçoit des informations ($\omega_m$, $\varepsilon_{all}$, $\alpha_{emb}$, L, $\omega_1$, $\omega_2$, $\beta_{pap}$) issues du moteur, de l'embrayage, de la boîte de vitesses, et d'organes de conduite du véhicule pour déterminer au moins une loi de contrôle de la transmission qui pilote l'embrayage, les rapports de la boîte de vitesses et le moteur, caractérisé en ce que le module électronique de commande reçoit au moins une information de mesure de la quantité ($E_{emb}$) d'énergie dissipée dans l'embrayage pour la comparer à une quantité ($E_{réf}$) d'énergie de référence dissipée dans l'embrayagé pour établir le fonctionnement de la boîte de vitesses selon une loi de contrôle de la boîte de vitesses adaptée à la pente du terrain où évolue le véhicule.

**FIG. UNIQUE**

EP 1 018 450 A1

**Description**

L'invention concerne un dispositif de pilotage des rapports de transmission d'un véhicule automobile.

L'invention concerne plus particulièrement un dispositif de pilotage des rapports de transmission d'un véhicule automobile, du type dans lequel un moteur du véhicule est accouplé à une boîte de vitesses robotisée du véhicule par l'intermédiaire d'un embrayage, du type dans lequel un module électronique de commande du véhicule est susceptible de recevoir des informations en provenance du moteur, de l'embrayage, de la boîte de vitesses, et d'organes de conduite du véhicule pour déterminer au moins une loi de contrôle de la transmission du véhicule pilotant l'actionnement de l'embrayage, l'engagement des rapports de la boîte de vitesses robotisée et le fonctionnement du moteur.

On connaît de nombreux exemples de dispositifs de pilotage des rapports de transmission, et notamment de pilotage d'une boîte de vitesses à commande dite robotisée de véhicule automobile.

Il s'agit pour la plupart de dispositifs destinés à équiper des boîtes de vitesses robotisées automatiques qui sont accouplées au moteur du véhicule par l'intermédiaire d'un convertisseur de couple, notamment hydraulique.

Les modules électroniques de commande sont susceptibles d'établir des lois de contrôle permettant, lorsque le véhicule roule, l'engagement du rapport de transmission adéquat.

Lorsque le véhicule est à l'arrêt et que le module électronique de commande sélectionne le premier rapport de marche avant, le véhicule est susceptible de démarrer quel que soit la pente du terrain sur lequel il roule, car le convertisseur de couple multiplie le couple que fournit le moteur à la transmission à basse vitesse.

Un problème se pose dans le cas d'un véhicule dépourvu de convertisseur de couple, comme c'est le cas pour un véhicule équipé d'une boîte de vitesses robotisée mécanique.

Ainsi, les passages des rapports étant commandés par la position de la pédale d'accélérateur, lorsque celle-ci est peu enfoncée et que le véhicule est soumis à une forte charge ou roule en côte, les passages des rapports peuvent survenir de façon inopinée et s'enchaîner rapidement. Notamment, le module électronique de commande est susceptible de provoquer une montée de rapport(s) au lieu d'un rétrogradage, et réciproquement.

En effet, la boîte de vitesses robotisée mécanique ne comportant pas de moyens de détection de la charge et/ou de la pente auxquelles est soumis le véhicule, le module électronique de commande ne peut pas déterminer de manière fiable le rapport le plus approprié.

Pour remédier à cet inconvénient l'invention propose un dispositif tenant compte de la charge globale, c'est à dire indifféremment de la pente du terrain à laquelle est soumis le véhicule ou de la charge réelle du véhicule.

Dans ce but, l'invention propose un dispositif du type précédemment décrit, caractérisé en ce que le module électronique de commande est susceptible de recevoir au moins une information de mesure de la quantité d'énergie dissipée dans l'embrayage pour la comparer à une quantité d'énergie de référence dissipée dans l'embrayage du véhicule et pour établir le fonctionnement de la boîte de vitesses robotisée selon une loi de contrôle de la boîte de vitesses qui est adaptée à la pente du terrain sur lequel fonctionne le véhicule.

Selon d'autres caractéristiques de l'invention :

- le module électronique de commande est susceptible d'établir le fonctionnement de la boîte de vitesses selon une loi de contrôle de référence associée au fonctionnement du véhicule sur terrain plat, ou bien selon une loi de contrôle associée au fonctionnement du véhicule en descente, ou bien au moins une loi de contrôle associée au fonctionnement du véhicule en montée,
- le module électronique de commande est susceptible de recevoir une information représentative de la vitesse du véhicule pour déterminer un état d'arrêt ou un état de roulage du véhicule,
- à partir de l'état d'arrêt du véhicule, le module électronique de commande est susceptible de recevoir une information provenant des organes de conduite du véhicule pour détecter un état d'intention de démarrage du véhicule,
- l'information provenant des organes de conduite du véhicule comporte des informations de mesure de la position de la commande de l'embrayage, de la position d'un papillon des gaz du moteur, et de la position d'un levier de changement des vitesses du véhicule,
- à partir de l'état d'intention de démarrage du véhicule, le module de commande est susceptible de recevoir l'information de mesure de la quantité d'énergie dissipée dans l'embrayage qui est fournie par des premiers moyens de mesure qui évaluent simultanément une position de la commande de l'embrayage, une différence de vitesses entre un arbre menant et un arbre mené de l'embrayage, une position d'un papillon des gaz du moteur, et une avance à l'allumage d'un moteur thermique à allumage commandé,
- à partir de l'état de roulage du véhicule, le module de commande est susceptible de recevoir en provenance de seconds moyens de mesure l'information de mesure de l'énergie dissipée dans l'embrayage, lesquels seconds moyens de mesure évaluent une différence de vitesse entre l'arbre menant et l'arbre mené de l'embrayage pour calculer une différence d'accélération associée et en déduire la quantité d'énergie dissipée dans l'embrayage,

- le module électronique de commande calcule la valeur absolue de la différence entre la quantité d'énergie dissipée dans l'embrayage et une quantité d'énergie de référence dissipée dans l'embrayage lors du fonctionnement du véhicule sur terrain plat,

- le module électronique de commande établit le fonctionnement de la boîte de vitesses selon la loi de contrôle de référence associée au fonctionnement du véhicule sur terrain plat si la différence entre la quantité d'énergie dissipée dans l'embrayage et la quantité d'énergie de référence est nulle, et détermine un état de fonctionnement en pente si cette différence est non nulle,

- à partir de l'état de pente, le module électronique de commande est susceptible de recevoir une information du signe de la différence de vitesses entre l'arbre menant et l'arbre mené de l'embrayage pour établir le fonctionnement de la boîte de vitesses, selon la loi de contrôle associée au fonctionnement du véhicule en descente si cette différence est négative, ou bien selon au moins une loi de contrôle associée au fonctionnement du véhicule en montée si cette différence est positive,

- si la différence de vitesses entre l'arbre menant et l'arbre mené de l'embrayage est positive, le module électronique de commande établit le fonctionnement de la boîte de vitesses selon une seule loi de contrôle associée au fonctionnement du véhicule en montée comportant un premier rapport court de marche avant,

- si la différence de vitesses entre l'arbre menant et l'arbre mené de l'embrayage est positive, le module électronique de commande compare la différence entre la quantité d'énergie dissipée dans l'embrayage et la quantité d'énergie de référence à des valeurs croissantes de différence de quantité d'énergie de référence pour déterminer son appartenance à une d'au moins deux fourchettes de différence de valeur d'énergie dissipée dans l'embrayage et établir le fonctionnement de la boîte selon une d'au moins deux lois de contrôle associée au fonctionnement du véhicule en montée.

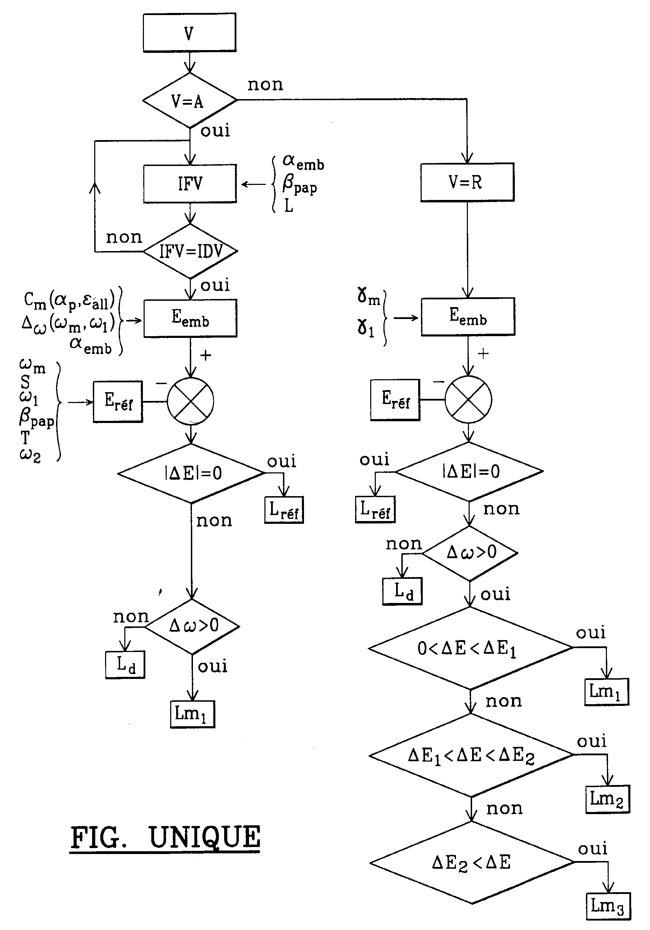

D'autres caractéristiques et avantages de l'invention apparaîtront à la lecture de la description détaillée qui suit pour la compréhension de laquelle on se reportera au dessin annexé dans lequel la figure unique est un organigramme du fonctionnement d'un dispositif de pilotage selon l'invention.

On a représenté sur la figure unique un organigramme du fonctionnement d'un dispositif de pilotage selon l'invention. La description des différentes étapes du module de commande sera faite du haut vers le bas de l'organigramme et pour chacune des branches principales gauche et droite de celui-ci.

Conformément à l'invention, le véhicule est initialement dans un état véhicule V qui est comparé par le module électronique de commande à un état d'arrêt A. Cet état d'arrêt A est par exemple celui qui est associé à une vitesse $\omega_2$ d'un arbre secondaire d'une boite de vitesses à deux arbres parallèles primaire et secondaire du véhicule, qui est ici la vitesse nulle.

Dans le cas où l'état du véhicule est l'état d'arrêt A, des organes de conduite du véhicule sont susceptibles de fournir une information d'intention de fonctionnement du véhicule IFV au module de commande. L'information d'intention de fonctionnement IFV du véhicule est plus particulièrement une fonction de plusieurs informations reçues et/ou mesurées.

Ces informations comprennent notamment une mesure $\alpha_{emb}$ de la position de la commande d'embrayage, qui est par exemple une information proportionnelle à la course d'une pédale d'embrayage agencée à l'intérieur du véhicule, une information $\beta_{pap}$ représentative de la position angulaire d'un papillon des gaz du moteur du véhicule, qui pourrait aussi en variante être une position d'une pédale d'accélérateur du véhicule, et une information S représentative de la sélection et l'engagement d'un rapport de transmission par un levier de changement de vitesses du véhicule.

Une fois que les organes de conduite du véhicule ont fourni au module électronique de commande l'information IFV d'intention de fonctionnement du véhicule, le module électronique de commande compare l'information IFV à une information IDV d'intention de démarrage du véhicule.

Cette information IDV est par exemple une information associée à une valeur $\alpha_{emb}$ correspondant à l'embrayage embrayé, à une valeur $\beta_{pap}$ non nulle, une information S correspondant à la sélection et engagement d'un rapport de transmission et à une information représentative de la vitesse $\omega_2$ de l'arbre secondaire de la boîte de vitesses du véhicule, qui est dans ce cas la vitesse nulle.

Si l'intention IFV de fonctionnement du véhicule est différente de l'intention IDV de démarrage du véhicule, le module électronique est ramené au stade précédent dans lequel l'intention IFV de fonctionnement du véhicule est évaluée à nouveau en fonction de la position de la commande d'embrayage $\alpha_{emb}$, de l'information $\beta_{pap}$ de la position du papillon des gaz du moteur, et de l'information L de la position du levier de changement du vitesse du véhicule.

Si, au contraire, le module électronique de commande détecte que l'intention IFV de fonctionnement du véhicule est égale à l'intention IDV de démarrage du véhicule, il procède au calcul de l'énergie $E_{emb}$ qui est dissipée réellement dans l'embrayage du véhicule.

L'énergie $E_{emb}$ dissipée dans l'embrayage du véhicule est en premier lieu une fonction de paramètres fixes inhérents à l'embrayage telles que la qualité de garniture de friction utilisée et une valeur particulière $\alpha_{emb}$ de la course d'embrayage, aussi appelée "point de léchage" pour lequel le couple moteur commence à être transmis par l'embrayage.

L'énergie $E_{emb}$ dissipée réellement dans l'embrayage du véhicule est en second lieu une fonction de paramètres variables que le module électronique de commande utilise pour calculer l'énergie $E_{emb}$ dissipée dans l'embrayage.

Ainsi, la valeur $E_{emb}$ de l'énergie dissipée dans l'embrayage est fonction du couple moteur $C_m$, de la différence de vitesses $\Delta\omega$ entre un arbre menant de vitesse de rotation $\omega_m$, c'est à dire par exemple l'arbre de sortie du moteur, et un arbre mené de vitesse $\omega_1$, c'est à dire par exemple un arbre primaire de la boîte de vitesses.

La valeur $E_{emb}$ de l'énergie dissipée dans l'embrayage est aussi fonction de la position $\alpha_{emb}$ de la commande de l'embrayage.

Le couple moteur $C_m$ dépend de l'information $\beta_{pap}$ de la position du papillon des gaz du moteur et d'une information $\varepsilon_{all}$ représentative du degré d'avance à l'allumage pour un moteur thermique à allumage commandé.

Les arbres menant et mené sont les arbres situés de part et d'autre de l'embrayage, c'est à dire fonctionnellement en amont et en aval de celui-ci. La différence de vitesses $\Delta\omega$ correspond donc à la vitesse différentielle de glissement $\omega_m$-$\omega_1$ de la garniture de l'embrayage sur le plateau de l'embrayage.

Lorsque le module électronique de commande a effectué le calcul de la valeur $E_{emb}$ de l'énergie dissipée réellement dans l'embrayage, il calcule la différence $\Delta E$ entre cette valeur $E_{emb}$ et une valeur de référence $E_{réf}$ d'énergie dissipée théoriquement dans l'embrayage du véhicule.

Cette valeur $E_{réf}$ correspond à une valeur d'énergie dissipée théoriquement dans l'embrayage lorsque le véhicule évolue sur terrain plat et dans certaines conditions de charge définies, telles que par exemple des conditions associées à une configuration dans laquelle le véhicule fonctionne avec seulement deux passagers à bord, le réservoir d'essence plein et non chargé.

Par ailleurs, la valeur $E_{réf}$ de l'énergie dissipée théoriquement dans l'embrayage sur terrain plat est une valeur variable qui est issue d'une base de données de valeurs dont chacune est associée à une configuration différente de fonctionnement du véhicule sur terrain plat.

Plus particulièrement, la valeur de l'énergie $E_{réf}$ dissipée est une fonction discontinue, discrète ou par morceaux, de la vitesse de rotation du moteur $\omega_m$, qui est aussi celle de l'arbre menant de l'embrayage, de la vitesse $\omega_1$ de l'arbre mené de l'embrayage, notamment l'arbre primaire de la boîte de vitesses à deux arbres parallèles, de la position S du levier de changement de vitesse du véhicule, de la position $\beta_{pap}$ du papillon des gaz du véhicule, d'une température T du moteur, de la vitesse $\omega_2$ de l'arbre secondaire, qui est liée à celle du véhicule, et de tout autre paramètre qui peut permettre d'établir précisément la valeur $E_{réf}$ de l'énergie dissipée théoriquement dans l'embrayage sur terrain plat.

On remarquera que dans le cas du démarrage du véhicule, la vitesse de rotation $\omega_2$ est nulle.

Puis, dans une étape suivante, le module électronique de commande compare la valeur absolue de la différence $\Delta E = E_{emb} - E_{réf}$ avec la valeur nulle.

Si cette valeur $|\Delta E|$ est nulle, le module électronique de commande établit une loi de contrôle $L_{réf}$ des rapports de transmission du véhicule. En effet, si la valeur absolue de la différence entre la valeur $E_{emb}$ et de la valeur $E_{réf}$ est nulle, cela signifie que l'énergie réellement dissipée dans l'embrayage est égale à l'énergie de référence dissipée théoriquement dans l'embrayage sur terrain plat, et par conséquent que le véhicule fonctionne sur terrain plat. La loi de contrôle $L_{réf}$ est alors associée au fonctionnement du véhicule uniquement sur terrain plat.

Dans le cas où la valeur absolue $|\Delta E|$ de la différence entre la valeur $E_{emb}$ et la valeur $E_{réf}$ n'est pas nulle, cela signifie que le véhicule ne fonctionne pas sur terrain plat mais en pente montante ou descendante et le module électronique de commande détermine un état transitoire de fonctionnement en pente (non représenté) qui signifie que le véhicule fonctionne soit en montée, soit en descente.

Pour déterminer si le véhicule fonctionne en montée ou en descente, le module électronique de commande compare alors la différence $\Delta\omega$ de vitesses entre l'arbre menant de l'embrayage, de vitesse $\omega_m$, et l'arbre mené de l'embrayage, de vitesse $\omega_1$, à la valeur nulle.

Si la différence $\Delta\omega$ est positive, cela signifie que l'arbre menant de l'embrayage tourne plus vite que l'arbre mené de l'embrayage parce que l'embrayage patine et que le véhicule est en montée. Dans ce cas, le module électronique de commande établit le fonctionnement du véhicule selon une loi de contrôle $Lm_1$ qui est associée à un fonctionnement en montée du véhicule.

Dans le cas contraire pour lequel la différence $\Delta\omega$ est nulle, cela signifie que l'arbre mené de l'embrayage tourne plus vite que l'arbre menant de l'embrayage parce que l'embrayage patine et que le véhicule est en descente, et le module électronique de commande établit le fonctionnement du véhicule selon une loi de contrôle de descente $L_d$ qui permet par exemple, le rétrogradage du véhicule et l'établissement d'un frein moteur.

La loi de contrôle de montée $Lm_1$ est avantageusement une loi de contrôle qui comporte un premier rapport de marche avant court, ce qui permet au véhicule initialement à l'arrêt de s'élancer dans une côte. En effet, il est nécessaire, pour que le véhicule puisse démarrer sans difficulté, de fournir un couple moteur important aux roues du véhicule, ce qui ne peut être obtenu qu'en privilégiant un rapport de transmission court.

On remarquera que, dans le cas du démarrage en montée décrit dans la branche de gauche de l'organigramme, une seule loi de contrôle est nécessaire puisque le véhicule roule à faible vitesse.

La branche principale de droite de l'organigramme décrit la configuration dans laquelle le module électronique de commande n'a pas déterminé que l'état du véhicule V ne correspondait pas à un état d'arrêt A du véhicule mais, au contraire, à un état de roulage R du véhicule.

Dans ce cas, le module électronique de commande calcule d'une façon différente la valeur $E_{emb}$ de l'énergie dissipée réellement dans l'embrayage du véhicule.

En effet, comme dans ce cas le véhicule roule, le module électronique de commande est à même, à partir d'une différence entre l'accélération $\gamma_m$ de l'arbre menant de l'embrayage, correspondant à l'accélération de l'arbre moteur du véhicule, et une accélération $\gamma_1$ de l'arbre mené de l'embrayage, de calculer la valeur de l'énergie $E_{emb}$ dissipée réellement dans l'embrayage, par exemple en intégrant les valeurs $\gamma_m$ et $\gamma_1$ par rapport au temps.

Similairement aux opérations réalisées dans la branche de gauche de l'organigramme, le module électronique de commande effectue alors la différence entre la valeur absolue $|\Delta E_{emb}|$ de l'énergie $E_{emb}$ réellement dissipée dans l'embrayage et de la valeur $E_{réf}$ de l'énergie dissipée dans l'embrayage sur terrain plat pour en déduire la valeur absolue.

Si cette valeur absolue est nulle, le module électronique de commande se trouve ramené dans une configuration analogue à celle décrite dans la branche de gauche de l'organigramme, et il établit le fonctionnement du véhicule selon la loi de contrôle de référence $L_{réf}$ associée au fonctionnement du véhicule sur terrain plat.

Dans le cas contraire, lorsque l'énergie $E_{emb}$ réellement dissipée dans l'embrayage est différente de l'énergie $E_{réf}$ dissipée théoriquement dans l'embrayage sur terrain plat, le module électronique de commande examine le signe de la différence de vitesse $\Delta\omega$ entre l'arbre menant et l'arbre mené de l'embrayage.

Si cette différence $\Delta\omega$ est négative ou nulle, cela signifie que le véhicule évolue en pente, et le module électronique de commande établit le fonctionnement du véhicule selon la loi de contrôle $L_d$ associée au fonctionnement du véhicule en descente.

Dans le cas où cette différence $\Delta\omega$ est positive, le module électronique de commande compare alors cette différence à des valeurs croissantes 0, $\Delta E_1$, et $\Delta E_2$ des différences de quantité d'énergie pour déterminer l'appartenance de la différence $\Delta E$ entre la valeur

de l'énergie dissipée théoriquement dans l'embrayage $E_{emb}$ et la valeur $E_{réf}$ de l'énergie de référence à une de trois fourchettes bornées par les valeurs croissantes 0, $\Delta E_1$, et $\Delta E_2$ précédentes, chaque fourchette étant associée à un fonctionnement du véhicule en montée selon la loi de contrôle $Lm_1$, ou à une loi de contrôle $Lm_2$ ou $Lm_3$ donnée.

Ainsi, dans une première configuration pour la différence $\Delta E$ est non nulle et inférieure à une première valeur de différence $\Delta E_1$, le module électronique de commande établit le fonctionnement du véhicule selon la loi de contrôle $Lm_1$. D'une façon analogue, lorsque la différence $\Delta E$ est comprise entre deux valeurs $\Delta E_1$ et $\Delta E_2$, le module électronique de commande établit le fonctionnement selon une loi de contrôle $Lm_2$ ne comportant pas de rapport court. Il en est de même lorsque la valeur absolue de la différence $\Delta E$ supérieure à une différence $\Delta E_2$ de quantité d'énergie, et le module électronique de commande établit le fonctionnement du véhicule suivant une loi de contrôle $Lm_3$ ne comportant pas de rapport court.

Ainsi, dans le cas où le véhicule est initialement dans un état de roulage, le module électronique de commande est susceptible d'établir son fonctionnement suivant la loi de référence $L_{réf}$ ou bien une loi de contrôle de descente $L_d$ ou bien une des trois lois de contrôle en montée $Lm_1$, $Lm_2$, ou $Lm_3$, qui permettent avantageusement d'optimiser les rapports de transmission du véhicule en fonction de la raideur de la montée sur laquelle il évolue.

**Revendications**

1. Dispositif de pilotage des rapports de transmission d'un véhicule automobile, du type dans lequel un moteur du véhicule est accouplé à une boîte de vitesses robotisée du véhicule par l'intermédiaire d'un embrayage, du type dans lequel un module électronique de commande du véhicule est susceptible de recevoir des informations ($\omega_m$, $\varepsilon_{all}$, $\alpha_{emb}$, L, $\omega_1$, $\omega_2$, $\beta_{pap}$) en provenance du moteur, de l'embrayage, de la boîte de vitesses, et d'organes de conduite du véhicule pour déterminer au moins une loi de contrôle de la transmission du véhicule pilotant l'actionnement de l'embrayage, l'engagement des rapports de la boîte de vitesses robotisée et le fonctionnement du moteur,
caractérisé en ce que le module électronique de commande est susceptible de recevoir au moins une information de mesure de la quantité ($E_{emb}$) d'énergie dissipée dans l'embrayage pour la comparer à une quantité ($E_{réf}$) d'énergie de référence dissipée dans l'embrayage du véhicule et pour établir le fonctionnement de la boîte de vitesses robotisée selon une loi de contrôle de la boîte de vitesses qui est adaptée à la pente du terrain sur lequel fonctionne le véhicule.

2. Dispositif de commande selon la revendication 1, caractérisé en ce que le module électronique de commande est susceptible d'établir le fonctionnement de la boîte de vitesses selon une loi ($L_{réf}$) de contrôle de référence associée au fonctionnement du véhicule sur terrain plat, ou bien selon une loi de contrôle ($L_d$) associée au fonctionnement du véhicule en descente, ou bien au moins une loi ($Lm_1$) de contrôle associée au fonctionnement du véhicule en montée.

3. Dispositif selon l'une quelconque des revendications précédentes, caractérisé en ce que le module électronique de commande est susceptible de recevoir une information ($\omega_2$) représentative de la vitesse du véhicule pour déterminer un état d'arrêt (A) ou un état de roulage (R) du véhicule.

4. Dispositif selon la revendication 3, caractérisé en ce que à partir de l'état d'arrêt (A) du véhicule, le module électronique de commande est susceptible de recevoir une information ($\alpha_{emb}$, L, $\omega_1$, $\beta_{pap}$) provenant des organes de conduite du véhicule pour détecter un état (IDV) d'intention de démarrage du véhicule.

5. Dispositif selon la revendication 4, caractérisé en ce que l'information ($\alpha_{emb}$, L, $\beta_{pap}$) provenant des organes de conduite du véhicule comporte des informations de mesure de la position ($\alpha_{emb}$) de la commande de l'embrayage, de la position ($\beta_{pap}$) d'un papillon des gaz du moteur, et de la position (L) d'un levier de changement des vitesses du véhicule.

6. Dispositif selon l'une des revendications 4 ou 5, caractérisé en ce que, à partir de l'état (IDV) d'intention de démarrage du véhicule, le module de commande est susceptible de recevoir l'information de mesure de la quantité d'énergie ($E_{emb}$) dissipée dans l'embrayage qui est fournie par des premiers moyens de mesure qui évaluent simultanément la position ($\alpha_{emb}$) de la commande de l'embrayage, une différence de vitesses ($\omega_m$-$\omega_1$) entre un arbre menant et un arbre mené de l'embrayage, la position ($\beta_{pap}$) d'un papillon des gaz du moteur, et une avance ($\varepsilon_{all}$) à l'allumage d'un moteur thermique à allumage commandé.

7. Dispositif selon la revendication 3, caractérisé en ce que à partir de l'état (R) de roulage du véhicule, le module de commande est susceptible de recevoir en provenance de seconds moyens de mesure l'information ($E_{emb}$) de mesure de l'énergie dissipée dans l'embrayage, lesquels seconds moyens de mesure évaluent une différence de vitesse ($\Delta\omega$) entre l'arbre menant et l'arbre mené de l'embrayage pour calculer une différence ($\gamma_m$-$\gamma_1$) d'accélération

associée et en déduire la quantité d'énergie ($E_{emb}$) dissipée dans l'embrayage.

8. Dispositif selon la revendication 7, caractérisé en ce que le module électronique de commande calcule la valeur absolue de la différence ($\Delta E$) entre la quantité d'énergie ($E_{emb}$) dissipée dans l'embrayage et une quantité d'énergie ($E_{réf}$) de référence dissipée dans l'embrayage lors du fonctionnement du véhicule sur terrain plat.

9. Dispositif selon l'une quelconque des revendications précédentes, caractérisé en ce que le module électronique de commande établit le fonctionnement de la boîte de vitesses selon la loi de contrôle ($L_{réf}$) de référence associée au fonctionnement du véhicule sur terrain plat si la différence ($\Delta E$) entre la quantité d'énergie ($E_{emb}$) dissipée dans l'embrayage et la quantité d'énergie ($E_{réf}$) de référence est nulle, et détermine un état de fonctionnement en pente si cette différence($\Delta E$) est non nulle.

10. Dispositif selon la revendication 9, caractérisé en ce que à partir de l'état de pente, le module électronique de commande est susceptible de recevoir une information du signe de la différence ($\Delta\omega$) de vitesses entre l'arbre menant et l'arbre mené de l'embrayage pour établir le fonctionnement de la boîte de vitesses

   selon la loi de contrôle ($L_d$) associée au fonctionnement du véhicule en descente si cette différence ($\Delta\omega$)est négative,
   selon au moins une loi de contrôle ($Lm_1$, $Lm_2$, $Lm_3$) associée au fonctionnement du véhicule en montée si cette différence ($\Delta\omega$)est positive.

11. Dispositif selon la revendication 10 prise en combinaison avec les revendications 4 à 6, caractérisé en ce que, si la différence ($\Delta\omega$) de vitesses entre l'arbre menant et l'arbre mené de l'embrayage est positive, le module électronique de commande établit le fonctionnement de la boîte de vitesses selon une seule loi de contrôle ($Lm_1$) associée au fonctionnement du véhicule en montée comportant un premier rapport court de marche avant.

12. Dispositif selon la revendication 10 prise en combinaison avec les revendications 7 à 8, caractérisé en ce que, si la différence ($\Delta\omega$) de vitesses entre l'arbre menant et l'arbre mené de l'embrayage est positive, le module électronique de commande compare la différence ($\Delta E$) entre la quantité d'énergie ($E_{emb}$) dissipée dans l'embrayage et la quantité d'énergie ($E_{réf}$) de référence à des valeurs croissantes ($\Delta E_1$, $\Delta E_2$) de différence de quantité d'énergie de référence pour déterminer son appartenance à une d'au moins deux fourchettes de valeur de différence d'énergie dissipée dans l'embrayage et établir le fonctionnement de la boîte selon une d'au moins deux lois ($Lm_2$, $Lm_3$) de contrôle associée au fonctionnement du véhicule en montée.

FIG. UNIQUE

## RAPPORT DE RECHERCHE EUROPEENNE

**Office européen des brevets**

**Numéro de la demande**

EP 00 40 0025

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 713 764 A (KLATT ALFRED) 15 décembre 1987 (1987-12-15) * colonne 3, ligne 56 - ligne 65 * * colonne 4, ligne 57 - colonne 5, ligne 11 * * colonne 6, ligne 38 - ligne 47; revendications 1,11; figures * | 1-5,9 | B60K41/28 |
| A | DE 38 31 449 A (MAN NUTZFAHRZEUGE AG ;MAN TECHNOLOGIE GMBH (DE)) 22 mars 1990 (1990-03-22) * revendications 1,4,6-8 * | 1-5,9 | |
| A | FR 2 761 936 A (LUK GETRIEBE SYSTEME GMBH) 16 octobre 1998 (1998-10-16) * page 5, ligne 3-16; revendication 1 * | 1,9 | |
| A | US 4 081 065 A (SMYTH ROBERT R ET AL) 28 mars 1978 (1978-03-28) * abrégé; revendications 1,4,5,13 * | 1,9 | **DOMAINES TECHNIQUES RECHERCHES (Int.Cl.7)** |
| A | US 5 823 912 A (ZIMMERMANN MARTIN ET AL) 20 octobre 1998 (1998-10-20) * revendications 1-4 * | 1,9 | B60K F16H F16D |

Le présent rapport a été établi pour toutes les revendications

| Lieu de la recherche | Date d'achèvement de la recherche | Examinateur |
|---|---|---|
| LA HAYE | 12 avril 2000 | Bufacchi, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.** EP 00 40 0025

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

12-04-2000

| Document brevet cité au rapport de recherche | | Date de publication | Membre(s) de la famille de brevet(s) | | Date de publication |
|---|---|---|---|---|---|
| US 4713764 | A | 15-12-1987 | DE | 3334726 A | 11-04-1985 |
| | | | EP | 0139982 A | 08-05-1985 |
| DE 3831449 | A | 22-03-1990 | AUCUN | | |
| FR 2761936 | A | 16-10-1998 | BR | 9801160 A | 28-09-1999 |
| | | | DE | 19815259 A | 15-10-1998 |
| | | | GB | 2327248 A | 20-01-1999 |
| | | | IT | MI980750 A | 08-10-1999 |
| | | | JP | 10281179 A | 20-10-1998 |
| | | | NO | 981512 A | 12-10-1998 |
| US 4081065 | A | 28-03-1978 | CA | 1106039 A | 28-07-1981 |
| | | | DE | 2752711 A | 16-11-1978 |
| | | | ES | 464927 A | 01-01-1979 |
| | | | FR | 2375490 A | 21-07-1978 |
| | | | GB | 1589527 A | 13-05-1981 |
| | | | IT | 1091655 B | 06-07-1985 |
| | | | JP | 1185860 C | 20-01-1984 |
| | | | JP | 53104928 A | 12-09-1978 |
| | | | JP | 58020812 B | 25-04-1983 |
| | | | MX | 5659 E | 02-12-1983 |
| | | | NL | 7713199 A,B, | 27-06-1978 |
| | | | SE | 431628 B | 20-02-1984 |
| | | | SE | 7713223 A | 24-06-1978 |
| US 5823912 | A | 20-10-1998 | BR | 9600239 A | 23-12-1997 |
| | | | DE | 19602006 A | 01-08-1996 |
| | | | FR | 2729896 A | 02-08-1996 |
| | | | FR | 2771346 A | 28-05-1999 |
| | | | GB | 2297369 A,B | 31-07-1996 |
| | | | JP | 8230503 A | 10-09-1996 |

EPO FORM P0460

Pour tout renseignement concernant cette annexe : voir Journal Officiel de l'Office européen des brevets, No.12/82